# EUROPÄISCHE PATENTSCHRIFT

(11) **EP 3 292 748 B1**
(45) Veröffentlichungstag und Bekanntmachung des Hinweises auf die Patenterteilung: **17.04.2019**
(21) Anmeldenummer: 17401095.9
(22) Anmeldetag: 24.08.2017
(51) Int. Cl.: A01C 7/04

(54) **DOSIERVORRICHTUNG MIT SAMMELRÄUMEN FÜR AUSGESONDERTE KÖRNER**
DOSING DEVICE WITH COLLECTION CHAMBERS FOR SEGREGATED SEEDS
DISPOSITIF DE DOSAGE AVEC DES CHAMBRES DE COLLECTION DES GRAINES SÉPARÉES

(30) Priorität: 13.09.2016 DE 102016117135
(43) Veröffentlichungstag der Anmeldung: 14.03.2018
(60) Teilanmeldung: 18192875.5
(73) Patentinhaber: Amazonen-Werke H. Dreyer GmbH & Co. KG, 49205 Hasbergen (DE)
(72) Erfinder: Dreyer, Justus, 49078 Osnabrück (DE)

(56) Entgegenhaltungen:
- EP-A1- 3 135 088
- WO-A1-2017/032691
- DE-A1-102012 105 048

## Beschreibung

Die Erfindung betrifft eine Dosiervorrichtung für granulares Material, insbesondere für Saatgut. Derartige Vorrichtungen finden in landwirtschaftlichen Sämaschinen Anwendung, um Saatgut in definierten Mengen an Abgabeelemente weiterzuleiten und dann auf einer landwirtschaftlichen Fläche abzulegen. Für bestimmtes Saatgut, beispielsweise Mais, ist es wünschenswert, einzelne Körner in vorherbestimmten Abständen abzulegen. Um das Saatgut zu vereinzeln, verwenden bekannte Dosiervorrichtungen eine mit einer Druckdifferenz beaufschlagbare Vereinzelungstrommel oder Vereinzelungsscheibe. Die Vereinzelungstrommel oder Vereinzelungsscheibe umfasst in Perforationsreihen angeordnete Perforationen, an denen sich das Saatgut anlagern kann, wodurch es zu einer Vereinzelung kommt.

Aus der EP 3 135 088 A1 wie auch aus der WO 2017/032691 A1 ist eine Dosiervorrichtung mit einer in einem Gehäuse drehbaren Fördereinrichtung und einer Vordosiereinheit, die über eine Seitenwand des Gehäuses in dasselbe mündet, bekannt. In der DE 10 2012 105 048 A1 wird ein Verteilaggregat für körniges Gut mit einem Gehäuse mit annähernd kreisbahn- und/oder kreissegmentförmiger Innenmantelfläche, wenigstens einer Einlassöffnung für befördertes körniges Gut, und mit einer im Gehäuse konzentrisch rotierenden Fördereinrichtung beschrieben. Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Dosiervorrichtung ist daher aus der DE 10 2012 105 048 A1 bekannt geworden. Diese Dosiervorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig gefördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Bei diesen Dosiervorrichtungen werden üblicherweise ein Zentraldosierer und ein damit verbundener Verteilerkopf verwendet, um das Saatgut der Fördereinrichtung zuzuführen. Das Saatgut wird dabei vom Verteilerkopf aus mit einer Luftströmung tangential in das Gehäuse der Dosiervorrichtung eingebracht. Andere Systeme verwenden konzentrisch angeordnete Mitnehmer, welche die Körner sukzessive beschleunigen und damit auf größere Kreisbahnen bewegen, bis sie zur eigentlichen Fördereinrichtung gelangen, die die Körner entlang der größten Kreisbahn bewegt. In einem solchen System werden die Körner des granularen Materials der eigentlichen Fördereinrichtung radial übergeben.

Bei der tangentialen Zuführung treffen die bereits mit einer gewissen Geschwindigkeit geförderten Körner auf die schnell rotierende Fördereinrichtung, was zu Beschädigungen der Körner des granularen Materials führen kann. Die radiale Zuführung verhindert dies zwar, da die Körner sukzessive auf die Rotationsgeschwindigkeit der Fördereinrichtung gebracht werden, die konzentrische Anordnung der Mitnehmer sowie der Fördereinrichtung führt jedoch dazu, dass die Führungsbahn der eigentlichen Fördereinrichtung bei einem größeren Radius angeordnet wird. Der größere Radius führt bei einem vorgegebenen Ablageabstand der Körner zu höheren Umlaufgeschwindigkeiten der Fördereinrichtung. Dies erhöht wiederum die Wahrscheinlichkeit für Beschädigungen der Körner, insbesondere nach dem Ausschleusen des granularen Materials aus der eigentlichen Dosiervorrichtung, da die Körner dabei eine erhöhte Geschwindigkeit aufweisen.

Im Folgenden werden zunächst Beispiele beschrieben, die dem Verständnis der Erfindung dienen, jedoch nicht direkt Gegenstand der beanspruchten Erfindung sind. Dieses Beispiel betrifft eine Dosiervorrichtung für granulares Material, insbesondere Saatgut, wobei die Dosiervorrichtung eine in einem Gehäuse drehbar gelagerte Fördereinrichtung umfasst, die mit einer Gehäusewandung oder einem Führungselement so zusammenwirkt, dass granulares Material von einem Aufnahmebereich in einen Abgabebereich förderbar ist, wobei die Dosiervorrichtung eine Vordosiereinheit umfasst, die über eine Seitenwand des Gehäuses in das Gehäuse mündet; wobei mit der Vordosiereinheit granulares Material in das Gehäuse eingebracht werden kann; und wobei die Zuführrichtung des granularen Materials von der Vordosiereinheit zur Fördereinrichtung (9) eine axiale Komponente in Bezug auf die Drehachse der Fördereinrichtung aufweist. Gemäß diesem Beispiel ist es also vorgesehen, dass die Dosiervorrichtung eine Vordosiereinheit umfasst, die über eine Seitenwand des Gehäuses in das Gehäuse mündet, und mit der granulares Material in das Gehäuse gefördert werden kann. Die Zuführrichtung des granularen Materials von der Vordosiereinheit zur Fördereinrichtung weist dabei eine axiale Komponente in Bezug auf die Drehachse der Fördereinrichtung auf. Durch diese axiale Zuführung kann das granulare Material gewissermaßen seitlich an die Fördereinrichtung übergeben werden. Auf die konzentrisch angeordneten Mitnehmer, welche in bekannten Systemen zur radialen Übergabe an die Fördereinrichtung verwendet wurden, kann somit verzichtet werden. Dies erlaubt es wiederum, den Radius der Führungsbahn der Fördereinrichtung zu verkleinern und somit die Umlaufgeschwindigkeit der Fördereinrichtung zu verringern. Dies erweist sich als schonender für das granulare Material, da die Körner des granularen Materials die Dosiervorrichtung dann auch mit geringerer Geschwindigkeit verlassen. Gleichzeitig können hohe Relativgeschwindigkeiten, wie sie bei der tangentialen Zuführung auftreten können, weitgehend vermieden werden.

Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide, wie etwa Weizen, Roggen, Gerste, Hafer oder Raps sein.

Durch die Vordosiereinheit kann bereits eine gewisse Vordosierung erzielt werden. Mit anderen Worten kann die Vordosiereinheit so ausgebildet sein, dass eine definierte Menge des granularen Materials pro Zeiteinheit in das Gehäuse der Dosiervorrichtung einbringbar ist. Die definierte Menge kann insbesondere dahingehend definiert sein, dass sie innerhalb eines vorherbestimmten Anzahlbereichs oder Volumensbereichs liegt. Die Vordosiereinheit kann also als volumetrische Vordosiereinheit ausgebildet sein.

Als Zuführrichtung des granularen Materials zur Fördereinrichtung wird hier insbesondere die Bewegungsrichtung von Körnern des granularen Materials bei der Übergabe an die Fördereinrichtung verstanden. Diese Zuführrichtung kann auch eine Komponente in radialer Richtung aufweisen, also in einer Richtung senkrecht zur Drehachse der Fördereinrichtung. In jedem Fall umfasst die Zuführrichtung jedoch auch eine axiale Komponente, also eine Bewegungskomponente parallel zur Drehachse der Fördereinrichtung.

Die axiale Komponente kann durch eine sich in Richtung des Gehäuses erweiternde Mantelfläche der Vordosiereinheit bewirkt werden. Wenn sich ein Korn des granularen Materials entlang der sich in Richtung des Gehäuses erweiternden Mantelfläche bewegt, erhält dessen Bewegung automatisch eine axiale und radiale Komponente. Die Mantelfläche kann sich insbesondere konisch in Richtung des Gehäuses erweitern.

In der Vordosiereinheit kann ein Mitnehmer drehbar gelagert sein, mit welchem das granulare Material in eine Rotationsbewegung versetzbar ist. Der Mitnehmer kann insbesondere Teil einer drehbar gelagerten Scheibe sein, oder mit einer solchen verbunden sein, die am Ende der sich in Richtung des Gehäuses erweiternden Mantelfläche der Vordosiereinheit angeordnet ist. Durch die sich in Richtung des Gehäuses erweiternde Mantelfläche umfasst die Vordosiereinheit insbesondere einen Rohrabschnitt, dessen Innendurchmesser zur Scheibe hin zunimmt. Die sich in Richtung des Gehäuses erweiternde Mantelfläche bildet dabei eine Innenfläche des Rohrabschnitts.

Durch den oben genannten Mitnehmer kann das granulare Material in eine Rotationsbewegung versetzt werden oder in einer bereits vorhandenen Rotationsbewegung weiter beschleunigt werden. Durch die resultierende Fliehkraft kann sich das granulare Material dann an der sich in Richtung des Gehäuses erweiternden Mantelfläche anlegen und sich entlang dieser bewegen. Dies kann wiederum die axiale Komponente in der Bewegungsrichtung des granularen Materials bewirken.

In der Seitenwand des Gehäuses kann eine Übergabeöffnung vorgesehen sein, über welche granulares Material aus der Vordosiereinheit dem Aufnahmebereich des Gehäuses zuführbar ist. Im Aufnahmebereich des Gehäuses kann das granulare Material dann von der Fördereinrichtung erfasst und zum Abgabebereich gefördert werden.

Der Aufnahmebereich kann insbesondere unmittelbar an die Übergabeöffnung angrenzen. Mit anderen Worten kann das granulare Material über die Übergabeöffnung unmittelbar oder direkt in den Aufnahmebereich gefördert werden.

Die sich erweiternde Mantelfläche der Vordosiereinheit kann stetig in eine Führungsfläche des Führungselements übergehen. Insbesondere können wenigstens ein Teil der Führungsfläche des Führungselements und die sich erweiternde Mantelfläche in einer Ebene liegen. Durch einen solchen glatten Übergang zwischen der sich erweiternden Mantelfläche und der Führungsfläche des Führungselements kann eine ungestörte Übergabe des granularen Materials an die Fördereinrichtung bewirkt werden.

Der Mitnehmer der Vordosiereinheit kann einen Rotor umfassen oder mit einem solchen verbunden sein, wobei der Rotor und die Fördereinrichtung durch einen gemeinsamen Antrieb antreibar sind. Durch den gemeinsamen Antrieb ist ein einfacher Aufbau möglich.

Die Fördereinrichtung und der Mitnehmer der Vordosiereinheit können insbesondere koaxial angeordnet sein. Dadurch ist eine weitere Vereinfachung des Aufbaus möglich. Die Fördereinrichtung und der Mitnehmer können also eine gemeinsame Drehachse aufweisen. Entlang dieser Drehachse kann eine Antriebswelle des gemeinsamen Antriebs verlaufen, mit der die Fördereinrichtung und/oder der Mitnehmer unmittelbar verbunden sind. Auf ein Getriebe kann also für den Antrieb der Fördereinrichtung und des Mitunternehmers verzichtet werden.

Der Mitnehmer kann insbesondere in Form eine Ausnehmung in einer oben beschriebenen Scheibe ausgebildet sein.

Die Dosiervorrichtung kann also einen Motor oder Antrieb zum Antreiben der Fördereinrichtung und der Vordosiereinheit umfassen, insbesondere wobei der Motor oder Antrieb hinsichtlich seiner Drehzahl regelbar oder steuerbar ist. Es ist aber auch möglich, dass die Dosiervorrichtung zwei separate Motoren oder Antriebe zum Antreiben der Fördereinrichtung und der Vordosiereinheit umfasst. Jeder der Motoren oder Antriebe kann hinsichtlich seiner Drehzahl regelbar oder steuerbar sein.

Die Vordosiereinheit kann einen Sammelbehälter für granulares Material umfassen. Dieser Sammelbehälter kann insbesondere außerhalb des Gehäuses der Dosiervorrichtung angeordnet sein. Durch diesen Sammelbehälter ist es möglich, die Vordosiereinheit aus einem ruhenden Saatgutvorrat heraus zu beschicken. Außerdem ermöglicht der Sammelbehälter eine Verwendung eines Nursingsystems zum Nachfüllen des Sammelbehälters. Insbesondere können in der Wandung des Sammelbehälters eine Vielzahl von Durchlassöffnungen vorgesehen sein. Diese Durchlassöffnungen können ein sogenanntes "Nursingsieb" bilden. Wenn Körner im Sammelbehälter die Durchlassöffnungen bedecken, wird der Förderluftstrom unterbrochen, wodurch die Nachlieferung oder Nachförderung von granularem Material aus einem zentralen Behältnis durch das Nursingsystem gestoppt wird. Eine derartige Saatgutzuführung an den Sammelbehälter ermöglicht einen einfacheren Aufbau, da auf einen Zentraldosierer mit Verteilerkopf verzichtet werden kann. Durch die Durchlassöffnungen ist das Nursingsystem selbstregulierend.

Der Sammelbehälter kann über eine Rückleitung mit dem Gehäuse verbunden sein, über die Körner des granularen Materials vom Gehäuse in den Sammelbehälter gefördert werden können. Diese Rückführung von nicht benötigtem granularen Material in den Sammelbehälter kann eine bedarfsgerechte Nachlieferung von granularem Material über das Nursingsystem ermöglichen oder verbessern.

Die Dosiervorrichtung, insbesondere die Fördereinrichtung, kann einen Zentrierschieber umfassen, der granulares Material entlang einer Führungsfläche eines Führungselements vom Aufnahmebereich in den Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Die Angabe "beidseitig abstützt oder führt" bedeutet, dass der Zentrierschieber Elemente umfasst, welche das zentrierte Korn an beiden Seiten (auf die Drehrichtung des Zentrierschiebers bezogen) abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Als Drehrichtung wird die Bewegungsrichtung bezeichnet, in der sich der Zentrierschieber im Betrieb der Dosiervorrichtung bewegt. Mit anderen Worten bezeichnet die Drehrichtung die Richtung der Vorwärtsbewegung des Zentrierschiebers. Wenn sich der Zentrierschieber entlang einer Kreisbahn bewegt, ist die Bewegungsrichtung an jedem Punkt der Kreisbahn tangential zu dieser. Die Angaben "seitlich" oder "beidseitig" beziehen sich daher auf die Bereiche quer zur Drehrichtung.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch ein oder mehrere Elemente umfassen, welche das zentrierte Korn in Drehrichtung gesehen nach hinten abstützen. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss. Auch die Breite des Führungselements insgesamt kann vom Aufnahmebereich zum Abgabebereich hin abnehmen.

Der Zentrierschieber kann so im Gehäuse gelagert sein, dass die Kreisbahn im Betrieb der Dosiervorrichtung im Wesentlichen vertikal verläuft. Mit anderen Worten kann die Drehachse, um die der Zentrierschieber rotiert, horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Der Aufnahmebereich kann ein bestimmtes Kreissegment der Kreisbahn des Zentrierschiebers umfassen.

Im Abgabebereich kann die Stützwirkung des Führungselementes entfallen oder der Verlauf des Führungselementes sich derart ändern, dass das wenigstens eine Korn durch Fliehkraft in die Auslassöffnung gefördert wird.

Als Führungsfläche des Führungselements wird hierin die für die Förderung des granularen Materials vom Aufnahmebereich in den Abgabebereich wirksame Fläche des Führungselements bezeichnet. Mit anderen Worten entspricht die Führungsfläche des Führungselements der Oberfläche des Führungselements, auf der Körner des granularen Materials bei der Förderung von dem Aufnahmebereich in den Abgabebereich hin bewegt werden. Aufgrund der Bewegung entlang der Kreisbahn wird das granulare Material durch Fliehkraft gegen die Führungsfläche des Führungselements gedrückt. Die Führungsfläche des Führungselements dient daher als Stütze für das granulare Material entgegen der Fliehkraft. Alternativ oder zusätzlich können die Körner auch durch die Schwerkraft gegen die Führungsfläche gedrückt werden. Dies kann insbesondere dann der Fall sein, wenn sich der Zentrierschieber gemäß einer Alternative nicht entlang einer Kreisbahn um die Drehachse bewegt, sondern entlang einer Bahn, die wenigstens teilweise parallel zur Horizontalen verläuft.

Wenn die Breite der Führungsfläche abnimmt geht diese Stützwirkung, wie oben erwähnt, für bestimmte Körner des granularen Materials verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von granularem Material im Aufnahmebereich bereitgestellt werden kann, selbst wenn über die Zufuhrleitung temporär zu wenig granulares Material zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des granularen Materials bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für im Laufe des Transports vom Aufnahmebereich zum Abgabebereich ausgesonderte Körner des granularen Materials angeordnet sein. Dadurch können ausgesonderte Körner wieder für den erneuten Transport vom Aufnahmebereich in den Abgabebereich bereitgestellt werden. Der Sammelraum kann durch die Wandung des Gehäuses begrenzt werden.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert sein, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe oder einem gemeinsam rotierenden Ring angeordnet sein. Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des granularen Materials beidseitig stützbar oder führbar ist. Das Element kann nach vorne hin (in Drehrichtung) offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des granularen Materials umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

Alternativ kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und können sich infolge der Fliehkraftwirkung aufstellen. Damit können diese Borsten ein Korn des granularen Materials seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein.

Das Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Dosiervorrichtung kann wenigstens ein Störelement umfassen, welches so ausgebildet ist, dass Körner des granularen Materials, die nicht durch den Zentrierschieber zentriert werden unter Einfluss des Störelements ihre Lage ändern oder vom Transport zum Abgabebereich hin ausgesondert werden. Ein derartiges Störelement begünstigt die Aussonderung überschüssiger Körner und somit die Vereinzelung des granularen Materials.

Das Störelement kann beispielsweise eine Druckluftdüse umfassen.

Es kann also wenigstens eine Druckluftdüse vorgesehen und so angeordnet sein, dass Druckluft auf granulares Material gerichtet werden kann, welches durch den Zentrierschieber entlang der Führungsfläche des Führungselements geschoben wird. Diese Druckluft kann eine Störung für Körner des granularen Materials darstellen, welche nicht durch den Zentrierschieber zentriert geführt werden. Dadurch kann die Aussonderung von überschüssigen Körnern unterstützt werden. Dies kann auch eine zuverlässigere Vereinzelung des granularen Materials ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Durch die Druckluftdüse kann Druckluft in radialer und/oder axialer Richtung ausgegeben werden.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Der oder die oben beschriebenen Zentrierschieber können in Drehrichtung eine Ausdehnung oder Länge aufweisen, die wenigstens dem Durchmesser der Auslassöffnung in Drehrichtung entspricht und kleiner ist, als der Abstand zwischen zwei aufeinanderfolgenden Zentrierschiebern, oder, bei nur einem Zentrierschieber, kleiner ist, als der Umfang der Kreisbahn entlang der sich der Zentrierschieber bewegt. Dadurch kann erreicht werden, dass der Zentrierschieber die Auslassöffnung möglichst lange wenigstens teilweise blockiert. Dies ist vorteilhaft, um ungewünschte Luftströmungen zwischen einer Zuführöffnung und der Auslassöffnung zu verringern. Die Länge kann insbesondere kleiner oder gleich 90% des Abstands zwischen zwei aufeinanderfolgenden Zentrierschiebern bzw. kleiner oder gleich 90% des Umfangs der Kreisbahn sein.

Der oder die oben beschriebenen Zentrierschieber können auch quer zur Drehrichtung eine Ausdehnung oder Breite aufweisen, die wenigstens dem Durchmesser der Auslassöffnung quer zur Drehrichtung entspricht. Dadurch ist eine noch bessere Abdeckung der Auslassöffnung möglich.

Alternativ zur beschriebenen Ausbildungsform unter Verwendung von Zentrierschiebern kann die Dosiervorrichtung auch wie in der DE 10 2012 105 048 A1 beschrieben ausgebildet sein. An die drehbar gelagerte Fördereinrichtung kann also annähernd tangential eine Innenmantelfläche des Gehäuses anschließen. Die Fördereinrichtung kann mit Taschen zusammenwirken, in denen Körner des granularen Materials gedrängt und kreisförmig befördert werden, bis in einem vorherbestimmten Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Insbesondere bei einigen der oben beschriebenen Dosiervorrichtungen können ausgesonderte Körner des granularen Materials über eine Rückleitung von einem Sammelraum innerhalb des Gehäuses in einen Sammelbehälter verbracht, von dort aus über die Vordosiereinheit wieder in das Gehäuse eingebracht werden, und für den erneuten Transport vom Aufnahmebereich in den Abgabebereich bereitstehen. Die ausgesonderten Körner können insbesondere unter der Wirkung der Fliehkraft und aufgrund ihrer kinetischen Energie, welche sie durch Wechselwirkung mit der Fördereinrichtung erhalten haben, in die Rückleitung gelangen, welche über eine Öffnung, insbesondere tangential, in das Gehäuse einmündet.

Es ist jedoch denkbar, dass diese kinetische Energie der Körner nicht ausreicht, um sie über die Rückleitung in den Sammelbehälter zu bewegen, beispielsweise bei geringen Drehzahlen des Zentrierschiebers oder wenn ein Korn frühzeitig in der Bewegung vom Aufnahmebereich in den Abgabebereich ausgesondert wird.

Es wurden Lösungen vorgeschlagen, bei denen im Sammelraum drehbar gelagerte Mitnehmer vorgesehen sind, durch welche die ausgesonderten Körner des granularen Materials im Sammelraum beschleunigt und in Folge durch Fliehkraft aus dem Sammelraum ausgebracht und in die Rückleitung gefördert werden können. Bei einem beidseitig des Führungselements vorgesehen Sammelraum werden hier jedoch wenigstens zwei Mitnehmer benötigt, um eine zuverlässige Ausbringung der ausgesonderten Körner aus dem Sammelraum zu gewährleisten.

Die Erfindung stellt sich die Aufgabe, Bauteile einzusparen und eine Dosiervorrichtung für granulares Material mit weniger Bauteilen bereitzustellen.

Diese Aufgabe wird durch eine Dosiervorrichtung gemäß Anspruch 1 gelöst.

Gemäß der Erfindung ist also vorgesehen, dass an einer oder an beiden Seiten des Führungselements ein erster Sammelraum für ausgesonderte Körner angeordnet ist, wobei an den ersten Sammelraum angrenzend an einer Seite des Führungselements ein zweiter Sammelraum vorgesehen ist, in dem ein drehbar gelagerter Mitnehmer angeordnet ist, und wobei der erste Sammelraum radial durch eine Wandung begrenzt wird, die sich in Richtung des zweiten Sammelraums, insbesondere konisch, erweitert, so dass ausgesonderte Körner aus dem ersten in den zweiten Sammelraum leitbar sind.

Somit ist es ausreichend, im zweiten Sammelraum einen Mitnehmer anzuordnen, der die ausgesonderten Körner beschleunigt, um sie in die Rückleitung zu verbringen, da ausgesonderte Körner, die in den ersten Sammelraum gelangen durch die Ausbildung der Wandung des ersten Sammelraums in den zweiten Sammelraum geleitet werden können. Eine Einsparung eines Mitnehmers ist daher möglich bei gleichzeitiger zuverlässiger Verbringung der ausgesonderten Körner über die Rückleitung in den Sammelbehälter.

Es kann also insbesondere nur im zweiten Sammelraum ein Mitnehmer vorgesehen sein. Mit anderen Worten kann im ersten Sammelraum kein Mitnehmer für die ausgesonderten Körner vorgesehen sein.

In der radial begrenzenden Wandung des zweiten Sammelraums kann eine Öffnung vorgesehen sein, über die eine Rückleitung in den zweiten Sammelraum mündet, die in einen Sammelbehälter führt, der zum Bereitstellen von granularem Material mit dem Gehäuse verbunden ist. Der Sammelbehälter kann über eine Einlassöffnung mit granularem Material befüllbar sein, inbesondere über ein Nachfüllsystem, etwa ein Nursingsystem.

Der Sammelbehälter kann so ausgebildet sein, dass über die Rückleitung eingebrachtes granulares Material bevorzugt gegenüber granularem Material, das über die Einlassöffnung zugeführt wird, aus dem Sammelbehälter ausbringbar ist. Dadurch kann erreicht werden, dass zunächst die während der Dosierung ausgesonderten Körner des granularen Materials Verwendung finden. Die Zuführung von granularem Material über ein Nachfüllsystem kann dann bedarfsgerecht gesteuert oder geregelt werden. Der Sammelbehälter kann mit einer oben beschriebenen Vordosiereinheit verbunden sein oder Teil einer oben beschriebenen Vordosiereinheit sein.

Die radial begrenzende Wandung des zweiten Sammelraums kann eine Innenfläche in Form eines Kreiszylindermantels aufweisen. Mit anderen Worten kann die Innenfläche der Wandung, welche den zweiten Sammelraum in radialer Richtung begrenzt gerade ausgebildet sein, also einen konstanten Abstand zur Drehachse der Fördereinrichtung aufweisen.

Der Mitnehmer kann eine Breite aufweisen, welche der Breite des zweiten Sammelraums entspricht. Der Mitnehmer kann alternativ oder zusätzlich eine radiale Erstreckung aufweisen, die dem Radius des zweiten Sammelraums entspricht. Dadurch können im zweiten Sammelraum angeordnete Körner des granularen Materials zuverlässig beschleunigt und über die Rückleitung ausgebracht werden. Es versteht sich, dass Breite und/oder radiale Erstreckung nicht exakt mit den entsprechenden Dimensionen des Sammelraums übereinstimmen müssen, da ansonsten eine Bewegung des Mitnehmers nicht möglich wäre. Die Dimensionen des Mitnehmers können aber im Wesentlichen den entsprechenden Dimensionen des zweiten Sammelraums entsprechen, also dergestalt, dass die Dimensionen des Mitnehmers um Weniges kleiner sind als die Dimensionen des zweiten Sammelraums, so dass eine ungehinderte Bewegung des Mitnehmer im zweiten Sammelraum möglich ist. Beispielsweise können die Breite des Mitnehmers und/oder die radiale Erstreckung des Mitnehmers um 0,1 bis 5 mm, insbesondere 0,1 bis 2 mm, kleiner als die entsprechenden Dimensionen des zweiten Sammelraums sein.

Im zweiten Sammelraum können auch mehrere Mitnehmer vorgesehen sein.

Der wenigstens eine Mitnehmer kann, insbesondere starr, mit der Fördereinrichtung, insbesondere einem Zentrierschieber der Fördereinrichtung, verbunden sein. Der wenigstens eine Mitnehmer kann entsprechend um die Drehachse des Zentrierschiebers drehbar sein. Damit kann der wenigstens eine Mitnehmer auch durch den Antrieb der Fördereinrichtung angetrieben werden.

Der wenigstens eine Mitnehmer kann so ausgebildet sein, dass er wenigstens teilweise entgegen der Drehrichtung ausweichen kann. Mit anderen Worten kann er also wenigstens teilweise entgegen seiner Bewegungsrichtung auslenkbar sein. Dadurch kann verhindert werden, dass Körner des granularen Materials an Scherstellen beschädigt werden. Eine solche Scherstelle kann beispielsweise an der Kante der Mündungsöffnung der Rückleitung ins Gehäuse entstehen. Der wenigstens eine Mitnehmer kann insbesondere zumindest teilweise aus einem flexiblen Material hergestellt sein, beispielsweise aus Gummi. Alternativ oder zusätzlich kann der wenigstens eine Mitnehmer ein Gelenk umfassen, dessen Gelenksachse insbesondere quer zur Drehrichtung des wenigstens einen Mitnehmers verläuft. Es wäre auch möglich, dass der wenigstens eine Mitnehmer mehrere flexible Borsten umfasst, also als Borstenbüschel ausgebildet ist.

Die hierin mit Bezug auf Anspruch beschriebene Dosiervorrichtung kann eines oder mehrere der Merkmale aufweisen, die zuvor in Bezug auf die Dosiervorrichtung gemäß dem obigen erläuternden Beispiel beschrieben wurden.

Ein Nachfüllsystem für granulares Material kann einen zentralen Vorratsbehälter zum Vorhalten des granularen Materials, eine oben beschriebene Dosiervorrichtung, und einen pneumatischen Förderkanal zum pneumatischen Fördern von granularem Material vom Vorratsbehälter zur Dosiervorrichtung umfassen. Ein derartiges Nachfüllsystem kann auch als Nursingsystem bezeichnet werden.

Das Nachfüllsystem kann insbesondere ein Gebläse umfassen, um den pneumatischen Förderkanal mit Förderluft zu beaufschlagen. Der pneumatische Förderkanal kann den zentralen Vorratsbehälter direkt oder unmittelbar mit der Dosiervorrichtung, insbesondere dem Sammelbehälter der Dosiervorrichtung, verbinden. Auf einen Verteilerkopf kann damit verzichtet werden.

Eine Sämaschine kann eine oben beschriebene Dosiervorrichtung oder ein oben beschriebenes Nachfüllsystem umfassen. Bei der Sämaschine kann es sich insbesondere um eine Einzelkornsämaschine handeln. Die Dosiervorrichtung oder das Nachfüllsystem können eines oder mehrere der oben genannten Merkmale aufweisen. Weitere Merkmale und Vorteile der Erfindung werden nachfolgend anhand der beispielhaften Figuren erläutert. Dabei zeigt:
Figur 1 eine perspektivische Ansicht einer beispielhaften Dosiervorrichtung; und
Figur 2 einen Querschnitt durch die beispielhafte Dosiervorrichtung nach Figur 1.

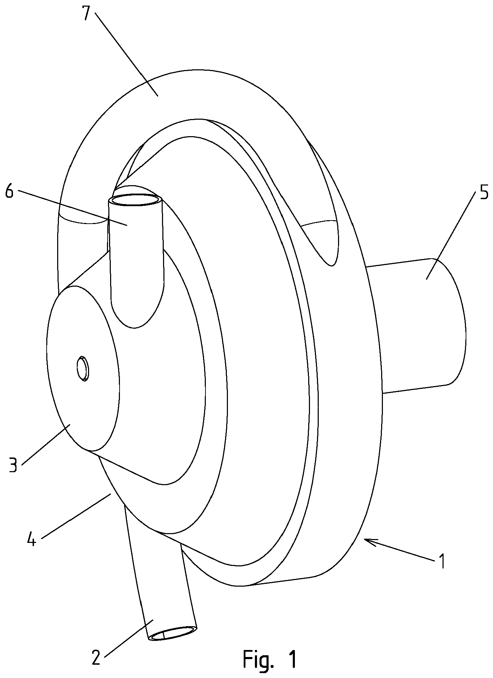

Figur 1 zeigt eine perspektivische Außenansicht einer beispielhaften Dosiervorrichtung für granulares Material gemäß der vorliegenden Erfindung. Die Dosiervorrichtung umfasst ein Gehäuse 1, innerhalb dessen eine hier nicht sichtbare Fördereinrichtung drehbar gelagert ist. Die Fördereinrichtung wirkt mit einer Gehäusewandung oder einem Führungselement so zusammen, dass granulares Material von einem Aufnahmebereich in einen Abgabebereich förderbar ist. Im Abgabebereich ist eine Auslassöffnung vorgesehen, über die das granulare Material aus dem Gehäuse 1 ausgeschleust werden kann. Das so ausgeschleuste granulare Material kann beispielsweise über eine in Figur 1 angedeutete Verbindungsleitung 2 an eine Abgabevorrichtung geleitet werden. Die Abgabevorrichtung kann beispielsweise ein Säschar sein oder ein solches umfassen.

Ebenfalls in Figur 1 dargestellt ist eine Vordosiereinheit 3, die über eine Seitenwand 4 des Gehäuses 1 in das Gehäuse 1 mündet.

Die Vordosiereinheit 3 umfasst einen drehbar gelagerten Rotor, der hier im Inneren der Vordosiereinheit 3 angeordnet und daher nicht sichtbar ist. Die Drehachse des Rotors der Vordosiereinheit 3 verläuft in diesem Beispiel koaxial zur Drehachse der Fördereinrichtung im Gehäuse 1.

Der Rotor der Vordosiereinheit 3 sowie die Fördereinrichtung werden in diesem Beispiel durch einen gemeinsamen Motor 5 angetrieben.

Die Zufuhr von granularem Material zur Dosiervorrichtung geschieht in diesem Beispiel über eine Zuführleitung 6, welche in Figur 1 schematisch dargestellt ist. Diese Zuführleitung 6 mündet in die Vordosiereinheit 3. Über diese Zuführleitung 6 kann granulares Material beispielsweise mit einem vorgeschalteten Verteilerkopf oder durch ein Nursingsystem in die Vordosiereinheit 3 eingebracht werden. In diesem Beispiel bildet die Vordosiereinheit gleichzeitig einen Sammelbehälter für das granulare Material aus, von dem aus die Fördereinrichtung im Gehäuse 1 mit granularem Material beschickbar ist. Es wäre aber auch denkbar, dass ein separater Sammelbehälter der Vordosiereinheit 3 vorgeschaltet und beispielsweise über die Zuführleitung 6 mit der Vordosiereinheit 3 verbunden ist.

Ebenfalls in Figur 1 zu sehen ist eine Rückleitung 7, welche das Innere des Gehäuses 1 mit der Vordosiereinheit 3 verbindet, so dass Körner des granularen Materials vom Gehäuse 1 in die Vordosiereinheit 3, insbesondere einen Sammelbereich oder Sammelbehälter der Vordosiereinheit 3, förderbar sind.

Das zurückgeführte granulare Material kann zusammen mit dem über die Zuführleitung 6 zugeführten granularen Material einen Saatgutvorrat innerhalb der Vordosiereinheit 3 bilden. Über den Rotor und damit verbundene Förderelemente kann dann granulares Material aus der Vordosiereinheit 3 über die Seitenwand 4 des Gehäuses 1 in das Innere des Gehäuses 1 verbracht werden, so dass es dort für die Fördereinrichtung bereitgestellt wird.

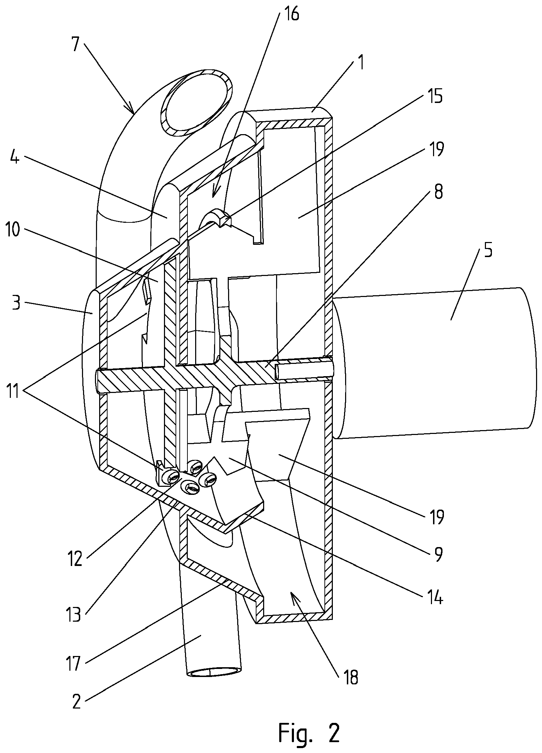

In Figur 2 ist ein Schnitt durch die beispielhafte Dosiervorrichtung gemäß Figur 1 dargestellt. Zu erkennen ist insbesondere das Gehäuse 1, die Verbindungsleitung 2 sowie die Vordosiereinheit 3. Angedeutet ist auch die Mündung der Rückleitung 7 in die Vordosiereinheit 3. Der gemeinsame Motor 5 ist nur schematisch dargestellt. Dieser treibt über einen Rotor 8 sowohl die Fördereinrichtung 9 als auch einen Mitnehmer 10 der Vordosiereinheit 3 an. Der Mitnehmer 10 umfasst hierbei eine Scheibe, welche unmittelbar angrenzend an die Seitenwand 4 angeordnet ist, welche die Vordosiereinheit 3 vom Inneren des Gehäuses 1 trennt. Die Scheibe des Mitnehmers 10 weist hier zwei Absätze oder Aussparungen 11 auf, in denen sich Körner des granularen Materials anordnen können und dadurch in Rotation versetzt werden bzw., wenn sie sich bereits in einer Drehbewegung befinden, weiter beschleunigt werden.

Die seitliche Wandung 4 des Gehäuses weist eine Öffnung 12 auf, durch die granulares Material von der Vordosiereinheit 3 in das Innere des Gehäuses 1 eingebracht werden kann. Die radial die Vordosiereinheit 3 begrenzende Mantelfläche 13 ist hier so ausgebildet, dass sie sich konisch in Richtung des Gehäuses 1 erweitert. Dadurch erhält das granulare Material, das durch den Mitnehmer 10 auf eine Kreisbahn beschleunigt wird eine Bewegungskomponente, die entlang der Drehachse der Fördereinrichtung bzw. des Mitnehmers 10 weist. Diese axiale Komponente der Bewegung führte dazu, dass das granulare Material durch die Öffnung 12 in das Gehäuse 1 eintritt und insbesondere unmittelbar in den Aufnahmebereich 14 der Fördereinrichtung 9 gelangt. Die Zuführrichtung des granularen Materials zur Fördereinrichtung 9 weist also eine axiale Komponente in Bezug auf die Drehachse der Fördereinrichtung 9 auf.

Im Aufnahmebereich 14 ist ein Führungselement vorgesehen, welches eine Führungsfläche ausbildet, entlang derer das granulare Material durch einen Zentrierschieber der Fördereinrichtung 9 bewegt wird. Der Zentrierschieber ist dabei so ausgebildet, dass er das granulare Material entlang der Führungsfläche vor sich herschiebt und im Wesentlichen nur ein einzelnes Korn seitlich abstützt und damit zentriert. Die Breite der Führungsfläche des Führungselements nimmt vom Aufnahmebereich 14 zum Abgabebereich hin ab. Im Bereich 15 der Figur 2 hat sich die Breite der Führungsfläche bereits wesentlich verringert. Durch die Abnahme dieser Breite werden kontinuierlich Körner des granularen Materials, die anfänglich durch den Zentrierschieber entlang der Führungsfläche geschoben wurden, ausgesondert. Nur das jeweils durch den Zentrierschieber zentrierte Korn verbleibt auf der Führungsbahn entlang der Führungsfläche und wird im Abgabebereich über eine Auslassöffnung aus dem Gehäuse 1 ausgebracht und an die Verbindungsleitung 2 geleitet, in der das Korn beispielsweise an ein Säschar gefördert wird.

Die ausgesonderten Körner gelangen in einen ersten Sammelraum 16, welcher das Führungselement in diesem Beispiel radial umgibt. Aufgrund ihrer Trägheit bewegen sich die ausgesonderten Körner weiter entlang einer Kreisbahn im ersten Sammelraum 16. Der erste Sammelraum 16 umfasst eine Begrenzungswandung 17, welche den ersten Sammelraum 16 radial begrenzt. Diese Begrenzungswandung 17 umfasst wenigstens teilweise eine Innenmantelfläche des Gehäuses 1. Die Begrenzungswandung 17 erweitert sich dabei konisch in Richtung eines zweiten Sammelraums 18, welcher an den ersten Sammelraum 16 angrenzend an einer Seite der Fördereinrichtung 9 angeordnet ist. Dadurch, dass sich die Begrenzungswandung 17 konisch in Richtung des zweiten Sammelraums 18 erweitert, werden ausgesonderte Körner aus dem ersten Sammelraum 16 in den zweiten Sammelraum 18 geleitet.

Im zweiten Sammelraum 18 sind zwei Mitnehmer 19 gezeigt, welche starr mit der Fördereinrichtung 9 verbunden sind und damit zusammen mit der Fördereinrichtung 9 rotieren. Diese Mitnehmer 19 beschleunigen die im zweiten Sammelraum 18 angeordneten Körner des granularen Materials, so dass sie in die Rückleitung 7, welche in den zweiten Sammelraum 18 mündet, eingebracht werden können. Separate Mitnehmer im ersten Sammelraum 16 können eingespart werden, da, wie oben erwähnt, die Körner aus dem ersten Sammelraum aufgrund der sich konisch erweiternden Wandung 17 in den zweiten Sammelraum 18 geleitet werden. Dadurch ist eine Einsparung von Bauteilen möglich.

Es versteht sich, dass in den zuvor beschriebenen Ausführungsbeispielen genannte Merkmale nicht auf diese speziellen Kombinationen beschränkt sind und auch in beliebigen anderen Kombinationen innerhalb des durch die Patentansprüche definierten Schutzbereichs möglich sind. Insbesondere kann die spezielle Ausführung der Vordosiereinheit 3 gemäß dem obigen erläuternden Beispiel auch unabhängig von der spezifischen Ausbildung des Gehäuses 1, wie in den Figuren dargestellt, realisiert werden. Die sich konisch erweiternde Wandung 17 ist also nicht mit der speziellen Ausbildung der Vordosiereinheit 3 zwingend verknüpft. Auch umgekehrt kann die spezielle Ausbildung des Gehäuses 1 mit anderen Vordosiereinheiten beliebig kombiniert werden.

## Patentansprüche

1. Dosiervorrichtung für granulares Material, insbesondere Saatgut, umfassend eine in einem Gehäuse (1) drehbar gelagerte Fördereinrichtung (9), die mit einem Führungselement so zusammenwirkt, dass granulares Material derart von einem Aufnahmebereich (14) in einen Abgabebereich förderbar ist, dass im Aufnahmebereich (14) aufgenommene überschüssige Körner des granularen Materials während des Transports vom Aufnahmebereich (14) zum Abgabebereich ausgesondert werden, während ein Korn des granularen Materials in den Abgabebereich gefördert und dort über eine Auslassöffnung aus dem Gehäuse (1) ausgeschleust wird,
wobei an einer oder an beiden Seiten des Führungselements ein erster Sammelraum (16) für ausgesonderte Körner angeordnet ist,
**dadurch gekennzeichnet, dass** an den ersten Sammelraum (16) angrenzend an einer Seite des Führungselements ein zweiter Sammelraum (18) vorgesehen ist, in dem ein drehbar gelagerter Mitnehmer (19) angeordnet ist, und
wobei der erste Sammelraum (16) radial durch eine Wandung (17) begrenzt wird, die sich in Richtung des zweiten Sammelraums (18), insbesondere konisch, erweitert, so dass ausgesonderte Körner aus dem ersten (16) in den zweiten (18) Sammelraum leitbar sind.

2. Dosiervorrichtung nach Anspruch 1, wobei im ersten Sammelraum (16) kein Mitnehmer vorgesehen ist.

3. Dosiervorrichtung nach Anspruch 1 oder 2, wobei in einer radial begrenzenden Wandung des zweiten Sammelraums (18) eine Öffnung vorgesehen ist, über die eine Rückleitung (7) in den zweiten Sammelraum (18) mündet, die in einen Sammelbehälter führt, der zum Bereitstellen von granularem Material mit dem Gehäuse (1) verbunden ist.

4. Dosiervorrichtung nach einem der Ansprüche 1-3, wobei eine radial begrenzende Wandung des zweiten Sammelraums (18) eine Innenfläche in Form eines Kreiszylindermantels aufweist.

5. Dosiervorrichtung nach einem der Ansprüche 1-4, wobei der Mitnehmer (19) eine Breite aufweist, welche der Breite des zweiten Sammelraums (18) entspricht.

6. Dosiervorrichtung nach einem der Ansprüche 1-5, wobei der Mitnehmer (19) eine radiale Erstreckung aufweist, die dem Radius des zweiten Sammelraums (18) entspricht.

## Claims

1. Metering apparatus for granular material, in particular seeds, comprising a conveying device (9) which is mounted rotatably in a housing (1) and interacts with a guide element in such a way that granular material can be conveyed from a receiving region (14) into a dispensing region in such a way that excess grains of the granular material which are received in the receiving region (14) are discarded during the transport from the receiving region (14) to the dispensing region, whereas one grain of the granular material is conveyed into the dispensing region and is ejected there from the housing (1) via an outlet opening, a first collecting space (16) for discarded grains being arranged on one side or on both sides of the guide element, **characterized in that** a second collecting space (18) is provided on one side of the guide element so as to adjoin the first collecting space (16), in which second collecting space (18) a rotatably mounted driver (19) is arranged, and the first collecting space (16) being delimited radially by way of a wall (17) which widens, in particular conically, in the direction of the second collecting space (18), with the result that discarded grains can be guided from the first collecting space (16) into the second collecting space (18).

2. Metering apparatus according to Claim 1, no driver being provided in the first collecting space (16).

3. Metering apparatus according to Claim 1 or 2, an opening being provided in a radially delimiting wall of the second collecting space (18), via which opening a return line (7) into the second collecting space (18) opens, which return line (7) leads into a collecting container which is connected to the housing (1) in order to provide granular material.

4. Metering apparatus according to one of Claims 1 to 3, a radially delimiting wall of the second collecting space (18) having an inner face in the form of a circular-cylindrical shell.

5. Metering apparatus according to one of Claims 1 to 4, the driver (19) having a width which corresponds to the width of the second collecting space (18).

6. Metering apparatus according to one of Claims 1 to 5, the driver (19) having a radial extent which corresponds to the radius of the second collecting space (18).

## Revendications

1. Dispositif de dosage pour des matériaux granulaires, en particulier des semences, comprenant un dispositif de transport (9) monté de façon rotative dans un boîtier (1), qui coopère avec un élément de guidage de telle manière que du matériau granulaire puisse être transporté d'une région de réception (14) à une région de distribution de telle façon que des graines excédentaires du matériau granulaire contenues dans la région de réception (14) soient séparées pendant le transport de la région de réception (14) à la région de distribution, tandis qu'une grain du matériau granulaire est transportée dans la région de distribution et y est expulsée hors du boîtier (1) par une ouverture de sortie, dans lequel une première chambre de collecte (16) pour des graines séparées est disposée sur un côté ou sur les deux côtés de l'élément de guidage, **caractérisé en ce qu'**il est prévu une seconde chambre de collecte (18) adjacente à la première chambre de collecte (16) sur un côté de l'élément de guidage, dans laquelle est disposé un élément d'entraînement (19) monté de façon rotative et dans lequel la première chambre de collecte (16) est limitée radialement par une paroi (17), qui s'évase, en particulier en cône, en direction de la seconde chambre de collecte (18), de telle manière que des graines séparées puissent être conduites de la première (16) à la seconde chambre de collecte (18).

2. Dispositif de dosage selon la revendication 1, dans lequel il n'est pas prévu d'élément d'entraînement dans la première chambre de collecte (16).

3. Dispositif de dosage selon la revendication 1 ou 2, dans lequel il est prévu dans une paroi de limitation radiale de la seconde chambre de collecte (18) une ouverture par laquelle une conduite de retour (7) débouche dans la seconde chambre de collecte (18) et conduit dans un réservoir de collecte, qui est relié au boîtier (1) pour la fourniture de matériau granulaire.

4. Dispositif de dosage selon l'une quelconque des revendications 1 à 3, dans lequel une paroi de limitation radiale de la seconde chambre de collecte (18)) présente une face intérieure en forme d'enveloppe cylindrique circulaire.

5. Dispositif de dosage selon l'une quelconque des revendications 1 à 4, dans lequel l'élément d'entraînement (19) présente une largeur, qui correspond à la largeur de la seconde chambre de collecte (18).

6. Dispositif de dosage selon l'une quelconque des revendications 1 à 5, dans lequel l'élément d'entraînement (19) présente une extension radiale, qui correspond au rayon de la seconde chambre de collecte (18) .
